# EUROPEAN PATENT APPLICATION

(11) **EP 1 099 528 A2**
(43) Date of publication of application: **16.05.2001**
(21) Application number: 00203872.7
(22) Date of filing: 06.11.2000
(51) Int. Cl.: B29C 47/02

(54) **Extrusion machine and method for forming profiles articles of synthetic resin reinforced with continuous fibres**

(30) Priority: 10.11.1999 IT RE990112
(71) Applicant: FERIOLI FILIPPO S.r.l., I-21055 Gorla Minore (Varese) (IT); Virginio Schiaretti Societa'per Azioni, 43010 Fontanini (Parma) (IT)
(72) Inventor: Rossi, Albino, 21055 Gorla Minore (Varese) (IT)
(74) Representative: Corradini, Corrado

(57) **Abstract**

The method comprises the forced conveying, under pressure, of synthetic resin-based fluid material under pressure into and through a profiled extrusion channel (20) provided in an extrusion die head (10); simultaneously feeding, into and through the extrusion channel (20), continuous reinforcing fibres (F) of indefinite length, such that they encounter the fluid material within the channel (20) and are entrained through the channel (20) together with the fluid material.

## Description

This invention relates to a method and a machine for forming profiled articles of synthetic resin reinforced with continuous fibres.

Herein, the term "profiled article" means articles of rectilinear axis, of indeterminate length, having a substantially constant cross-section, either of closed profile or of open profile.

A typical but not exclusive application of the invention is in forming tubular articles, in particular lighting poles and similar structural articles.

In the current state of the extrusion art, articles are formed only from thermoplastic resin reinforced with short fibres. Because of the nature of the resin (even if reinforced), the articles which can be obtained are obviously not ideal for applications in which they are mechanically stressed, as in the case of lighting poles and similar structural articles, in which stress is considerable, in particular bending stress.

In contrast, lighting poles are formed of thermosetting resin enriched with long or even continuous reinforcing fibres (roving) by methods totally different from extrusion, namely so-called "poltrusion" processes in which the long or continuous fibres are impregnated with thermosetting resin, followed by centrifuging of the fibres impregnated in this manner.

This is in any event a relatively complicated technology, requiring relatively lengthy specific operating times and complex plants.

An object of this invention is to provide a method and machine able to form, by the extrusion technique, profiled articles of synthetic resin, in particular tubular articles such as lighting poles or others, able to resist high stress, in particular bending.

This and other objects are attained by the invention as characterised in the claims.

The extrusion method of the invention comprises the forced conveying, under pressure, of synthetic resin-based fluid material into and through a profiled extrusion channel provided in an extrusion die head, while simultaneously feeding, into and through the extrusion channel, continuous reinforcing fibres of indefinite length, such that they encounter said fluid material within the channel and are entrained through the channel together with the fluid material.

In particular, the direction in which the synthetic resin-based fluid material is introduced into the extrusion channel forms an angle to the direction in which the continuous reinforcing fibres are introduced into the same channel. More particularly, the fluid material is introduced into the extrusion channel at an angle to the channel axis and the reinforcing fibres are introduced into the extrusion channel parallel to the channel axis.

Advantageously, the fluid material introduced into the extrusion die head is a synthetic resin mixed with reinforcing fibres of limited length.

The machine of the invention comprises:
a die head possessing a profiled extrusion channel having a downstream portion the cross-section of which determines the form of the profiled article;
means for introducing, under pressure, synthetic resin-based fluid material into the upstream portion of the extrusion channel,
means for introducing continuous reinforcing fibres of indefinite length into the extrusion channel within a portion in which they encounter the fluid material.

The invention is described in detail hereinafter with the aid of the accompanying figures, which illustrate by way of non-limiting example one embodiment of the machine for implementing the method.

Figure 1 is a schematic general plan view of the plant for extruding tubular articles, in which the machine of the invention is applied.

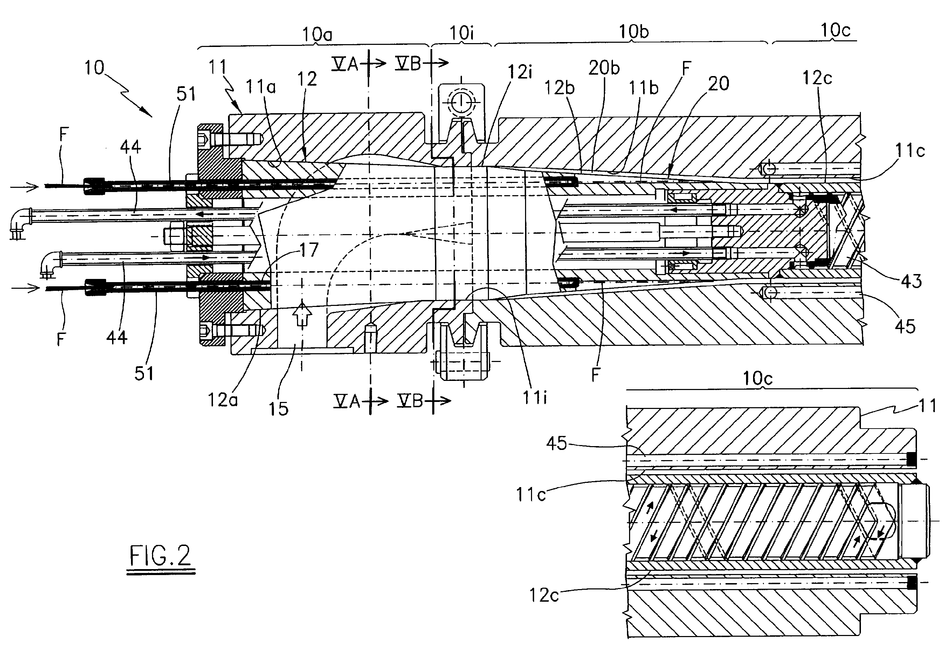

Figure 2 is a section through the die head 10 of Figure 1 taken on the vertical axial plane.

Figure 3 is a detail of Figure 2, regarding the upstream portion of the female element of the die head 10.

Figure 4 is a section on the plane IV-IV of Figure 3.

Figures 5A and 5B are sections on the planes VA and VB of Figure 2 respectively.

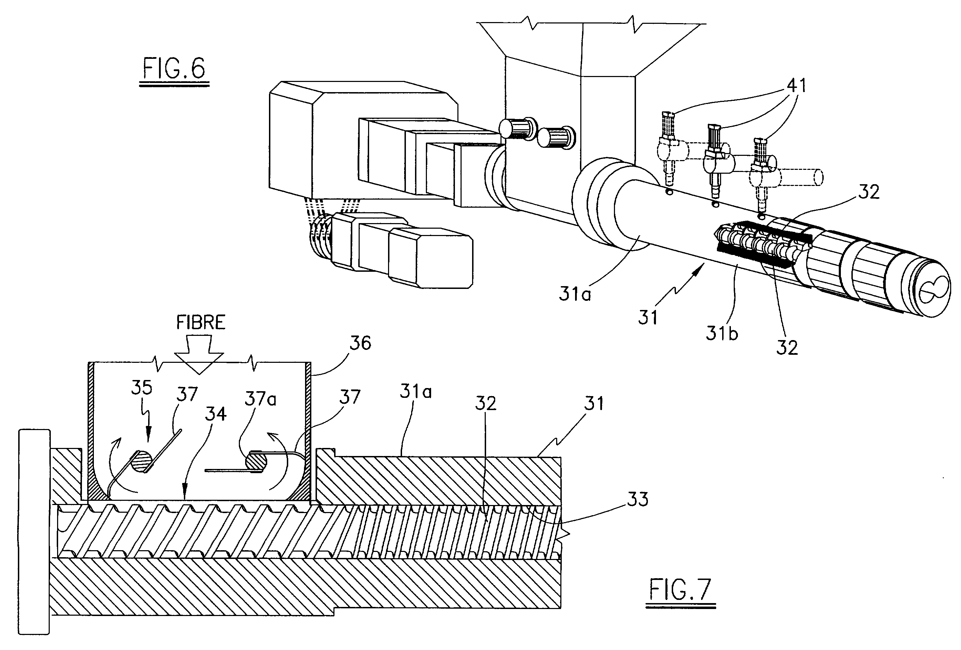

Figure 6 is a perspective view of the machine 30 of Figure 1 for forming a mixture of fibres.

Figure 7 is a section through a detail of Figure 6, taken on the axial plane.

The extrusion machine of the invention comprises an extrusion die head 10 comprising an axially hollow female component 11 and a male component 12 inserted axially into the female component 11, to together define a profiled extrusion channel 20.

The head 10 comprises, starting from the upstream end, a first portion 10a followed by a second portion 10b and a third portion 10c. In the portion 10a, the male component 12 has an overall frusto-conical lateral surface 12a converging in the downstream direction; in the second portion 10b, the surface 12b of the component 12 is equally frusto-conical; finally, in the third portion 10c, the surface 12c of the component 12 is cylindrical (i.e. formed with generators parallel to the axis of the head 10) and, in the particular case in which a profiled article of circular tubular section (for example a hollow pole) is to be formed, is of circular cross-section.

The female component 11 has an internal axial through cavity which, in the first portion 10a, has an overall frusto-conical lateral surface 11a converging in the downstream direction, in the second portion 10b it has an equally frusto-conical surface 11b, and finally, in the third portion 10c, it has a cylindrical surface 11c which, in the particular case in which a profiled article of circular tubular section (for example a hollow pole) is to be formed, is of circular cross-section.

In the upstream first portion 10a, the two components 11 and 12 mate perfectly and hence the respective surfaces 11a and 12a are in mutual contact (with the exception of the concavities 21 described hereinafter); in this portion 10a an insertion fit is thus achieved which supports the male component 12 within the female component 11. In contrast, in the second portion 10b and in the third portion 10c, the surfaces 11b and 11c of the female component 11 have a diameter greater than the corresponding surfaces 12b and 12c of the male component 12, in order to form a tubular channel the cross-section of which is of constant thickness, to define the intermediate portion and downstream portion of the tubular extrusion channel (indicated overall by 20 in the figures).

Preferably, between the first portion 10a and the second portion 10b there is provided an intermediate portion 10i of limited length, in which the male component 12 has a cylindrical surface 12i and the female component 11 has an equal surface 11i which lies in contact with the surface 12i; the reason for this is to form a support and centering region for the male component 12 within the female component 11.

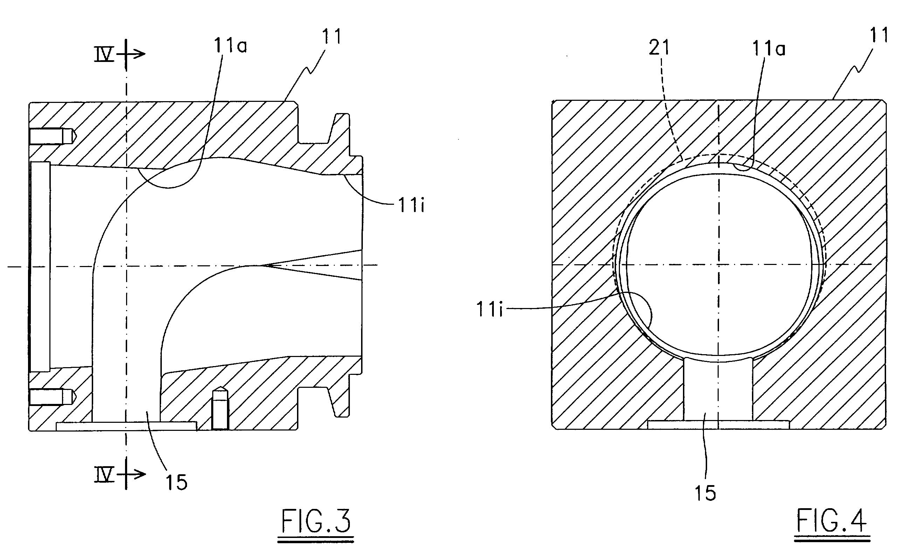

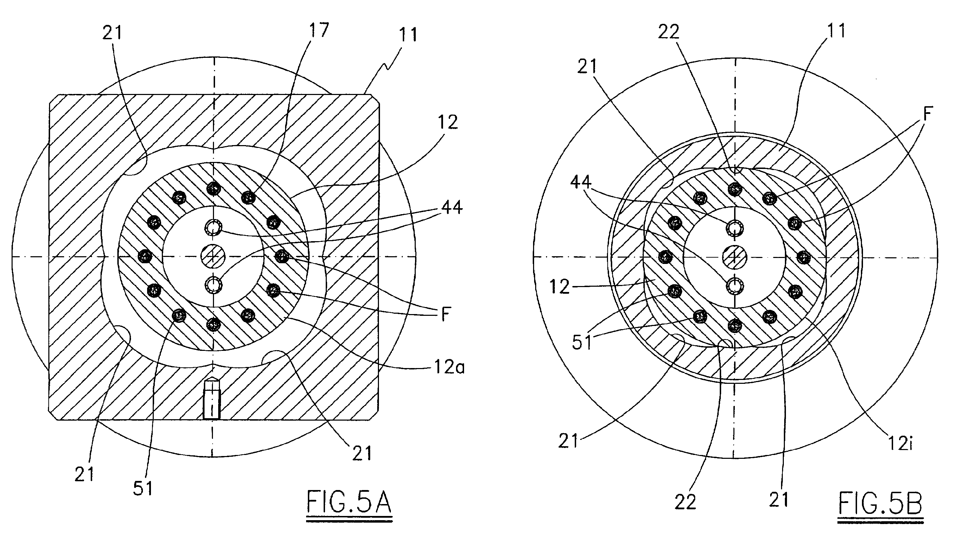

Within the first portion 10a there is provided in the female component 11 a radial lateral inlet 15 for introducing synthetic resin-based fluid material into the upstream portion of the extrusion channel 20. This upstream portion serves as an introduction for conveying the fluid material from the inlet 15 to the second portion 20b of the channel 20, where this is of frusto-conical shape. In this upstream portion, starting from the inlet 15, the extrusion channel comprises slight concavities 21 (four in the figures) for removing material on the surfaces 11a and 11i of the female component 11 (see Figures 3, 4, 5A, 5B in particular). The longitudinal axis of the concavities 21 commences radially at the inlet 15 and then, after a curve of 90 degrees (Figure 3), extends axially downstream until it opens into the portion 20b of the channel 20, corresponding to the portion 10b. On the surface 11a of the first portion 10a, these concavities 21 involve the entire circumference of the cross-section, hence the channel 20 extends without interruptions through 360 degrees (see Figure 5A in particular); in contrast on the surface 11i, the concavities 21 have a more limited extension in cross-section, such that between them there are defined four projecting regions 22 having the same diameter as the male component 12, in which the surface 12i of the male component 12 adheres to the surface 11i of the female component 11 (see Figure 5B in particular).

The purpose of the concavities 21 is to convey the fluid material, entering through the inlet 15, to the portion 20b of the channel 20, the regions 22 acting as a support for the male component 12.

The die head 10 is connected, via the inlet 15, to a machine for introducing synthetic resin-based fluid material under pressure, in particular to a machine 30 for forming a mixture of reinforcing fibres of limited length and synthetic resin.

Advantageously, the machine 30 is constructed in accordance with the simultaneous Italian invention patent application in the name of the same applicants.

Briefly, the machine 30 comprises a screw conveyor 31, having two screw augers 32 counter-rotating within corresponding channels 33 substantially adhering to the profile of the screws 32, fed upstream by a fibre feed device 35 provided with rotary entrainment/mixing means for the fibres and arranged to introduce the fibres into the initial section 31a of the screw conveyor 31, through an inlet port 34 the axis of which is perpendicular to the plane defined by the two axes of the screw augers 32.

The fibre feed device 35 comprises a hopper 36 of substantially vertical axis, positioned on the inlet port 34 provided on the upper region of the conveyor 31, for introducing fibrous material into this latter. Inside the hopper 36 there are positioned two motorized shafts 37a provided with elastic blades 37 rotating about an axis parallel to the plane defined by the two axes of the screw augers 32. Said blades 37 have a length such as to interfere, at their ends, with the lower portion of the hopper 36 such that, during rotation, the blades 37 flex when they interfere with said lower portion, and then elastically resume their normal profile when the blade rises higher, to lie immersed in the mass of fibrous material contained in the hopper (see Figure 7).

Downstream of the initial section 31a of the conveyor 31 there is provided a following section 31b into which synthetic resin is injected in the molten state. In particular, if this is thermosetting resin, this is introduced into the conveyor 31 at ambient temperature in a substantially liquid state by simple injectors 41 fed by pumps (of known type, not shown in the figures), such as to form within the section 31b a mixture comprising from 50% to 98% of fibres.

Advantageously, the section 31b comprises a portion in which the screws 32 are shaped to provide mixing, to render the fibre-resin mixture more homogeneous, followed by a final portion in which the screws are shaped to provide an effective axial thrust to introduce the fluid fibre-resin material into the head 10 at sufficiently high pressure.

With the head 10 there are also associated means for introducing continuous reinforcing fibres F of indefinite length into the extrusion channel 20 as far as a portion in which they encounter the fluid fibre-resin material.

In particular, the male component 12 comprises in its interior, along the upstream part (portions 10a and 10i) of the extrusion channel 20, a plurality of tubular guides 51 provided with respective internal channels within which thin sheaves of continuous fibres F are made to slide; the guides 51 are positioned in channels 17, parallel to the axis of the channel 20, their downstream ends opening onto the surface 12b within the intermediate portion 20b of the channel 20, where the form of this channel generally converges in the downstream direction.

The fibres F arrive at the guides 51 by unwinding from large bobbins 52 supported by a frame 53.

The figures show an embodiment for forming tubular articles of thermosetting resin. In this case, as is well known, the resin must be maintained at a suitable temperature to prevent excessive hardening on heating.

Consequently, in the final portion 10c, in which the channel maintains a constant cross-section, a system of channels (known per se) is provided, through which a conditioning fluid is circulated to maintain the temperature of the material within suitable values. In detail, in the section 10c the male component 12 is provided internally with ducting 43 fed by two channels 44 inserted into the upstream part of the male component 12, for entry and exit of the conditioning fluid respectively.

The female component 11 is also provided internally with ducting 45, positioned in correspondence with the ducting 43 and acting together with it.

In operation, a mass of material formed from fibres of limited length, but still relatively long, is fed in bulk into the hopper 36, through which it tends to descend by gravity into the screw conveyor 31.

The action of the rotary blades 37 is particularly effective in eliminating the bridges which the fibres tend to form,so facilitating fibre descent; of particular importance in this respect is the fact that the blades 37 flex against the lower portion of the hopper, and in resuming their proper shape repeatedly strike (as a loaded spring) the fibrous mass accumulated in that region, to move it and mix it, with an effectiveness which, as has been found experimentally, greatly facilitates fibre descent through the port 34.

Synthetic resin (thermosetting) in the molten state is simultaneously introduced into the section 31b of the conveyor 31 via the injectors 41, and is mixed and rendered homogeneous within the section 31b by the rotation of the screw augers.

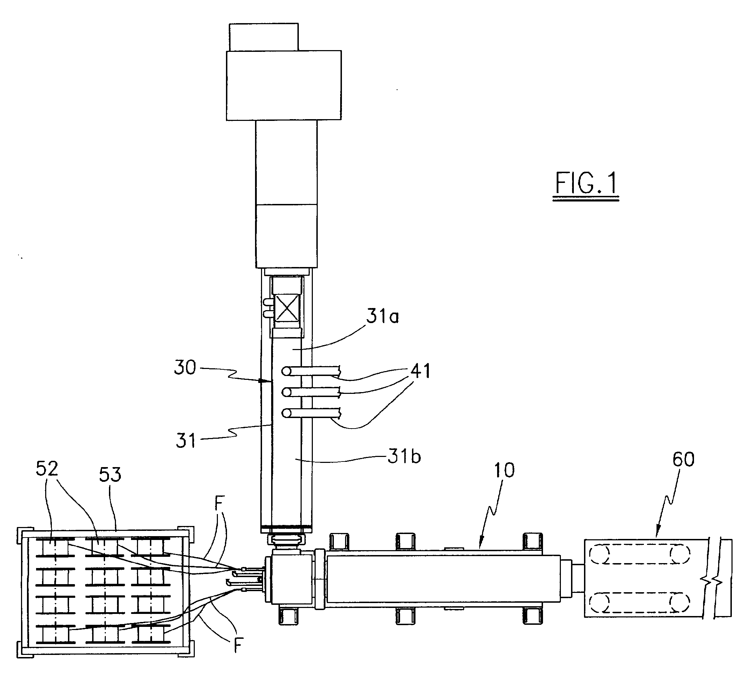

There then emerges from the conveyor 31 a fluid material formed from fluid synthetic resin (thermosetting) mixed with relatively long fibres (even some centimetres) which is introduced under pressure into the inlet port 34. From here, the fluid material is urged along the concavities 21 (introduction portion) until the portion 20b of the channel 20. Here the fluid material encounters the continuous fibres F introduced via the guides 51 and, in advancing along the intermediate portion of the channel 20, and given that this latter is of frusto-conical shape converging in a downstream direction, it mixes intimately with these fibres and also drags them with itself. In the final part of the channel 20, the material (integrated with the continuous fibres F) assumes the desired form and dimensions and finally leaves from the head 10. From here, the article enters a unit 60 (of known type and shown only schematically in Figure 1) which heats it to cause it to harden, and also pulls the article in a downstream direction in a manner concordant and synchronized with the advancement of the material and of the fibres F through the head 10.

By virtue of the invention, articles of indefinite length are obtained by an extrusion process and hence with the advantages typical of extrusion, these articles also being reinforced by longitudinal continuous fibres F involving the entire article and providing it with superior mechanical resistance, in particular against bending.

The invention can be equally used to form articles of thermoplastic resin.

Numerous modifications of a practical and applicational nature can be made to the invention, but without departing from the scope of the inventive idea as claimed below.

## Claims

1. An extrusion method for for forming profiled articles of synthetic resin reinforced by continuous fibres, characterised by comprising the following steps:
forced conveying, under pressure, of synthetic resin-based fluid material into and through a profiled extrusion channel (20) provided in an extrusion die head (10),
simultaneously feeding, into and through the extrusion channel (20), continuous reinforcing fibres (F) of indefinite length, such that they encounter the fluid material within the channel (20) and are entrained through the channel (20) together with the fluid material.

2. A method as claimed in claim 1, characterised in that the direction in which the synthetic resin-based fluid material is introduced into the extrusion channel (20) forms an angle to the direction in which the continuous reinforcing fibres (F) are introduced into the same channel (20).

3. A method as claimed in claim 1, characterised in that the synthetic resin-based fluid material is introduced into the extrusion channel (20) at an angle to the channel axis, the continuous reinforcing fibres (F) being introduced into the extrusion channel (20) parallel to the axis of the channel (20).

4. A method as claimed in claim 1, characterised in that the fluid material introduced into the extrusion die head (10) is a synthetic resin mixed with reinforcing fibres (F) of limited length.

5. An extrusion machine for forming profiled articles of synthetic resin reinforced by fibres, characterised by comprising:
a die head (10) possessing a profiled extrusion channel (20) having a downstream portion the cross-section of which determines the form of the profiled article;
means for introducing, under pressure, synthetic resin-based fluid material into the upstream portion of the extrusion channel (20),
means for introducing continuous reinforcing fibres (F) of indefinite length into the extrusion channel to emerge within a portion (20b) in which they encounter the fluid material.

6. A machine as claimed in claim 5, characterised in that the die head (10) comprises an axially hollow female component (11) and a male component (12) inserted axially into the female component (11), to together define said extrusion channel (20), said male component (12) comprising in its interior, in correspondence with the upstream portion of the extrusion channel (20), a plurality of channels (17) the downstream end of which opens into the extrusion channel (2), for inserting the continuous fibres (F) into the channel (20).

7. A machine as claimed in claim 6, characterised in that the extrusion channel (20) comprises an intermediate portion (20b) with a general shape converging in the downstream direction, said channels (17) for inserting the continuous fibres (F) being parallel to the axis of the channel (20) and opening at their downstream end into said intermediate portion (20b).

8. A machine as claimed in claim 5, characterised in that, in the upstream part (10a, 10i), the female component (11) and male component (12) mate perfectly with each other, their respective surfaces (11a, 11i and 12a, 12i) being in mutual contact, in said said surfaces (11a and 11i) of the female component (11) there being provided slight concavities (21) the longitudinal axis of which commences radially at a lateral inlet (15) and then, after a curve, extends axially downstream until they open into the channel (20), these concavities (21) having a limited extension in cross-section, between them there being defined the same number of projecting regions (22) having the same diameter as the male component (12), and acting as a support for the male component (12) on the female component (11).

9. A machine as claimed in claim 5, characterised in that the die head (10) is connected upstream to a machine (30) for forming a mixture of reinforcing fibres (F) of limited length and synthetic resin.

10. A machine for forming a mixture of reinforcing fibres of limited length and synthetic resin in accordance with claim 9, characterised by comprising:
a screw conveyor (31), having two screw augers (32) counter-rotating within corresponding channels (33) substantially adhering to the profile of the screws (32), and having an initial section (31a) for the insertion and subsequent thrusting of the fibres, and a downstream section (31b) into which synthetic resin material in the fluid state is injected;
a fibre feed device (35) provided with rotary entrainment/mixing means (37) for the fibres and arranged to introduce the fibres into said initial section (31a) of the screw conveyor, through an inlet port (34) the axis of which is perpendicular to the plane defined by the two axes of the screw augers (32).
